# EUROPEAN PATENT SPECIFICATION

(11) **EP 2 631 547 B1**
(45) Date of publication and mention of the grant of the patent: **23.07.2014**
(21) Application number: 13156210.0
(22) Date of filing: 21.02.2013
(51) Int. Cl.: F24D 3/08, F24H 1/12, F24D 12/02

(54) **System for heating two mutually separated liquids**
System zum Erhitzen von zwei voneinander getrennten Flüssigkeiten
Système de chauffage de deux liquides séparés l'un de l'autre

(30) Priority: 21.02.2012 NL 2008324
(43) Date of publication of application: 28.08.2013
(73) Proprietor: ATAG Verwarming Nederland B.V., 7131 PE Lichtenvoorde (NL)
(72) Inventor: Meinen, Rudi, 7122 MG Aalten-Lintelo (NL); Blij, Gideon Andreas Ferdinand, 7007 MZ Doetinchem (NL)
(74) Representative: Schumann, Bernard Herman Johan

(56) References cited:
- WO-A1-2006/051259
- DE-A1- 19 625 206
- GB-A- 2 463 512
- NL-C2- 2 001 267

## Description

The invention relates to a system for heating two mutually separated liquids, wherein a first liquid is intended for heating a building and wherein the second liquid is tap water.

Such a system is known for instance from the Netherlands patent specification number NL 2001267 in the name of the present applicant. The system of NL 2001267 comprises:
- a device for heating the first liquid, or a central heating boiler, the device comprising:
- a housing with an air feed, a fuel feed and a flue gas discharge;
- a burner disposed in the housing for combusting fuel and air supplied to the burner while releasing flue gases, which burner is connected on the one hand for medium throughflow to the fuel feed and the air feed and is connected on the other for medium throughflow to the flue gas discharge;
- a first heat exchanger connected for medium throughflow to the flue gas discharge for the purpose of transferring heat from the flue gases to the first liquid in order to heat the first liquid;
- a second heat exchanger disposed downstream of the first heat exchanger for transferring residual heat from the flue gases to the tap water in order to preheat the tap water;
- a third heat exchanger disposed downstream of the first heat exchanger and the second heat exchanger for transferring heat from the first liquid to the preheated tap water in order to further heat the preheated tap water.

The features according to the preamble of claim 1 are disclosed in WO 2006051259

In the system according to NL 2001267 the tap water is heated while it is being drawn off, first in the second heat exchanger by transfer of the residual heat from the flue gases and then in the third heat exchanger by transfer of heat from the first liquid heated in the first heat exchanger. An advantage hereof is that the residual heat from the flue gases is used to preheat the tap water. A drawback however is that, at the moment no tap water is being drawn off, the residual heat from the flue gases is not used, and this residual heat is discharged with the flue gases to the outside air.

It is an object of the invention to at least partially obviate this drawback. It is a particular object of the invention to provide a system of the type stated in the preamble wherein the residual heat from the flue gases can be effectively used even when tap water is not being drawn off.

The object is achieved by providing a system of the type stated in the preamble which comprises according to the invention a reservoir for storing tap water, which reservoir is disposed downstream of the third heat exchanger and connected for medium throughflow thereto by means of a first conduit, wherein the conduit debouches in an upper part of the reservoir such that the tap water heated in the third heat exchanger is delivered during use into the upper part of the reservoir, and wherein the reservoir is on the other hand connected for medium throughflow by means of a second conduit to the second heat exchanger and disposed upstream thereof, which second conduit is connected to a lower part of the reservoir for the purpose of supplying tap water from the lower part of the reservoir to the second heat exchanger.

Because the system according to the invention comprises a reservoir for storing tap water, during heating of the first liquid in the first device the tap water can be preheated in the second heat exchanger by extracting the residual heat from the flue gases, even if the tap water is at that moment not being drawn off. Applicant has found that an energy-saving of about 9% can hereby be realized.

An advantage of the conduit debouching in the top of the reservoir is that the hot tap water is delivered to the top of the reservoir so that the tap water can be stored in stratified manner. Tap water present at the bottom of the reservoir, this tap water being relatively cold, can be discharged from the lower part of the reservoir and guided to respectively the second and third heat exchanger in order to be heated and subsequently be delivered to the top of the reservoir until all the water in the reservoir has eventually reached the desired final temperature. The tap water can in this way be stored in stratified manner, wherein the tap water at the top of the reservoir has the highest temperature and the tap water at the bottom of the reservoir has the lowest temperature, until all the tap water in the reservoir has reached a substantially homogenous final temperature. The final temperature lies between about 56-60°C, this temperature being sufficiently high to prevent proliferation of legionella bacteria which may be present. In order to further prevent legionella the whole of the tap water in the reservoir can be heated with a predetermined regularity, for instance once every seven days.

In both the system of NL 2001267 and the system according to the invention the first liquid is used to heat the spaces in a building, wherein the first liquid flows through a pipe network with radiators, and also to heat the tap water, wherein the first liquid flows through the third heat exchanger. The system comprises for this purpose a first three-way valve with which it is possible to set whether the first liquid flows to the pipe network with radiators or to the third heat exchanger. The first three-way valve can for instance be disposed downstream of the central heating boiler and upstream of the third heat exchanger and the pipe network with radiators. The three-way valve can also be disposed downstream of the third heat exchanger and the pipe network with radiators and, conversely, upstream of the central heating boiler. The three-way valve is set in practical manner such that the first liquid flows either to the third heat exchanger or to the pipe network with radiators.

The reservoir is preferably fully filled with tap water during use and optionally comprises an opening for venting the reservoir.

For the purpose of drawing off hot tap water the reservoir comprises a draw-off conduit which debouches in an upper part of the reservoir for the purpose of drawing off heated tap water stored in the reservoir.

In an embodiment of the system according to the invention the reservoir comprises a tube which is disposed vertically therein and via which the conduit is connected to the reservoir, wherein the tube encloses the conduit and debouches in the upper part of the reservoir via a first opening, wherein the conduit debouches at a predetermined height in the tube, and wherein the tube has a number of second openings debouching in the reservoir, each at a predetermined height which is lower than the height at which the conduit debouches in the tube, for the purpose of delivering tap water at a temperature lower than a maximum temperature of the tap water to the reservoir such that the tap water is delivered via this second opening to the reservoir where the temperature of the tap water is equal to or lower than the temperature of the tap water stored at this height.

This system according to the invention provides the advantage that, when the third heat exchanger is not operating or not operating at full power, so that the tap water therein cannot be heated to the desired maximum temperature, the tap water can still be heated to some extent in the second heat exchanger so that the residual heat in the flue gases can be utilized. The tap water heated to some extent can then be delivered via the second openings to the reservoir at the correct height so that the stratification in the reservoir is not disrupted. The residual heat in the flue gases can in this way be utilized optimally. Applicant has found that a further energy-saving of between about 5 and 22% can hereby be achieved, this saving being additional to the above stated savings of about 9%. The overall saving of this system according to the invention can therefore lie between about 14 and 31%. The extent of the saving depends substantially on the volume of the reservoir, wherein a larger volume results in a greater saving.

The flow rate with which the tap water flows when the third heat exchanger is not operating or not operating at full power is lower than a maximum flow rate such that the tap water does not flow into the reservoir via the first opening, which debouches in the top of the reservoir, but on the contrary flows downward on the outer side of the conduit in the tube and flows via this second opening into the reservoir where the temperature of the tap water is equal to or lower than the temperature of the tap water stored at this height. The flow rate at which the tap water flows when the third heat exchanger is not operating, or not operating at full power, can for instance lie between 5-25%, and is preferably about 15%, of the maximum flow rate.

The predetermined height at which the conduit debouches in the tube lies for instance at between 40-75% of the height of the reservoir, preferably between 50-65% of the height of the reservoir, more preferably at about 60% of the height of the reservoir.

In an embodiment of the system according to the invention the tube comprises three second openings which preferably debouch in the reservoir at respectively between 15-20%, 22-28% and 30-35% of the height of the reservoir. The second openings particularly debouch in the reservoir at respectively 17%, 25% and 33% of the height of the reservoir. Applicant has found that these heights are very suitable for delivering the somewhat heated water at the correct height.

There is preferably no heat transfer between the tube and the tap water stored in the reservoir. The tube is preferably manufactured for this purpose from a thermally non-conductive material. The material can for instance comprise or be polypropylene (PP) or other non-heat-conducting plastic.

In another embodiment of the system according to the invention the system comprises a second three-way valve, which second three-way valve is connected for medium throughflow to the second heat exchanger on the one hand and to the second conduit and the draw-off conduit on the other, wherein the second three-way valve is adjusted such that at a random moment either the second conduit or the draw-off conduit is connected for medium throughflow to the second heat exchanger for the purpose of feeding to the second heat exchanger tap water coming from either the second conduit or the draw-off conduit such that tap water present either at the bottom of the reservoir or at the top of the reservoir is supplied to the second heat exchanger.

An advantage of this system according to the invention is that the operation of the third heat exchanger is reversible so that it is also possible using hot tap water to heat the cold(er) first liquid in the third heat exchanger by relinquishing heat from the tap water to the first liquid. The spaces in a building can hereby be heated using a relatively low power, this being advantageous when the heat demand is relatively low. This is not possible with the central heating boiler known per se from for instance NL 2001267. The per se known central heating boiler can for instance operate at a minimum of 1/5 of its maximum power, this still being relatively high when the heat demand is relatively low. The per se known central heating boiler will in this case fulfil the relatively low heat demand by switching alternately on and off. This can damage the central heating boiler and moreover provides less comfort.

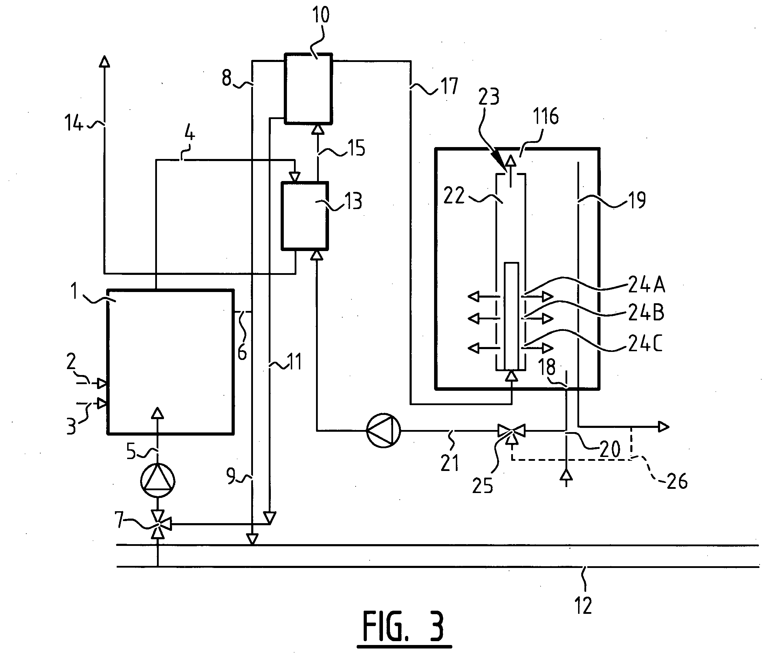

For this purpose the first three-way valve is preferably a controllable three-way valve such that it is possible to set a predetermined part of the first liquid to flow to the third heat exchanger and a predetermined part of the first liquid to flow to the radiators for heating the spaces in the building. The controllable three-way valve is in an intermediate position here so that the first liquid is divided in a predetermined distribution over the third heat exchanger and the radiators. The greater the part of the first liquid which flows to the third heat exchanger, the greater the heat transfer from the hot tap water to the cold(er) first liquid will be and the higher the temperature of the first liquid with which the building can be heated. Depending on the heat demand, or the power required, the first liquid can flow at a higher flow rate through the third heat exchanger and the radiators. A controllable pump can be provided for this purpose. This will be further elucidated with reference to figure 3.

The second three-way valve can be set here such that the draw-off conduit is connected for medium throughflow to the second heat exchanger only when power for heating the building is demanded which lies below a minimum power which can be supplied by the device for heating the first liquid.

The second three-way valve can be set here such that, when the reservoir is filled with a predetermined percentage or more of heated tap water, the draw-off conduit is connected for medium throughflow to the second heat exchanger. Heated tap water is understood here to mean tap water having the desired final temperature of about 56-60°C.

This predetermined percentage can lie for instance between 70-100%.

In order to determine the percentage to which the reservoir is filled with hot tap water, the reservoir can comprise a number of temperature sensors disposed at predetermined heights in the reservoir for measuring the temperature of the tap water at this height, and wherein the three-way valve is adjustable on the basis of the measured temperatures.

The invention will be further elucidated with reference to the figures shown in a drawing, in which
figure 1 shows a schematic overview of a first embodiment of a system according to the invention;
figure 2 shows a schematic overview of a second embodiment of a system according to the invention;
figure 3 shows a schematic overview of a third embodiment of a system according to the invention; and
figures 4A, 4B show a boiler forming part of the system according to the invention, wherein figure 4A is a perspective cross-sectional view and figure 4B is a front view.

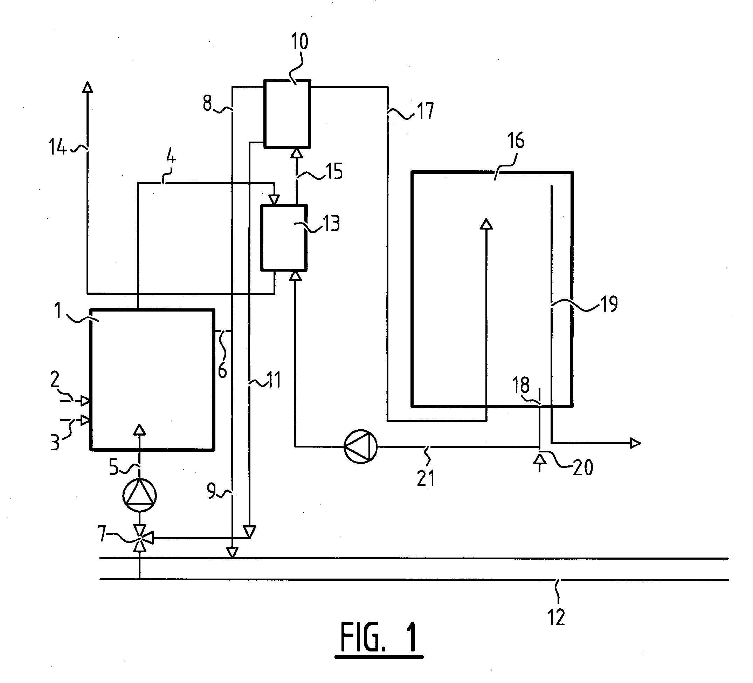

Figure 1 shows a system according to a first embodiment, wherein the different components of the system are shown schematically. As shown in figure 1, the system comprises a central heating boiler 1. A central heating boiler is per se known and is a device for heating water for the purpose of heating spaces in a building. Central heating boiler 1, which is not shown in detail, comprises a housing with an air feed 2, a fuel feed 3 and a flue gas discharge 4. Disposed in the housing is a burner for combusting fuel and air supplied to the burner while releasing flue gases, the burner being connected on the one hand for medium throughflow to the fuel feed and the air feed and being connected on the other for medium throughflow to the flue gas discharge (not shown). Also disposed in the housing is a first heat exchanger which is connected for medium throughflow to the flue gas discharge 4 for the purpose of transferring heat from the flue gases to the water in order to heat the water (not shown). The water is fed into the housing via water feed 5. For operation of the central heating boiler 1 reference is made to NL 2001267.

The system of figure 1 further comprises a second heat exchanger 13 disposed downstream of the first heat exchanger for the purpose of transferring residual heat from the flue gases to tap water in order to preheat the tap water. Having relinquished the residual heat, the flue gases are discharged via an outlet 14 to an area outside the building. The preheated tap water flows via a conduit 15 to a third heat exchanger 10. Second heat exchanger 13 can be located in or outside the housing of central heating boiler 1.

The heated water leaves central heating boiler 1 via a water outlet 6. The heated water can then be guided in two different directions. This is possible in a first direction via a conduit 8 to third heat exchanger 10, in which heat exchanger 10 the hot water relinquishes its heat to the tap water coming from second heat exchanger 13 and having a temperature lying below the temperature of the water. After relinquishing its heat, the water flows back via a conduit 11 and via water feed 5 to central heating boiler 1. The hot water can also be guided in a second direction via a conduit 9 to radiators disposed in the spaces in the building for the purpose of heating the spaces in the building. Once the water has generated its heat via the radiators to the spaces in the building, the water flows back via a conduit 12 and via water feed 5 to central heating boiler 1. Conduit 12 and conduit 11 are connected to water feed 5 via a three-way valve 7. Setting of the three-way valve 7 determines whether the water heated in central heating boiler 1 flows via conduit 8 to third heat exchanger 10 or whether the hot water flows via conduit 9 to the radiators. The water heated by central heating boiler 1 is in this way used to heat the spaces in the building as well as to heat tap water, wherein using three-way valve 7 it is possible to control whether the hot water is used to heat the spaces in the building or to heat the tap water. The water for heating the building is physically separated here from the tap water.

According to the invention the system of figure 1 further comprises a reservoir 16 for storing tap water, which reservoir is disposed downstream of third heat exchanger 10 and connected for medium throughflow thereto by means of a conduit 17. Reservoir 16 is fully filled with tap water and preferably comprises an opening for venting the reservoir 16. Conduit 17 debouches in an upper part of reservoir 16 so that the tap water heated in third heat exchanger 10 is delivered into the upper part of reservoir 16. Because the hot tap water is delivered at the top of reservoir 16, the tap water can be stored in stratified manner in reservoir 16. On the underside the reservoir 16 is connected for medium throughflow to second heat exchanger 13 by means of conduits 18, 21, wherein reservoir 16 is disposed upstream of second heat exchanger 13 so that tap water from the lower part of reservoir 16 can be fed via conduits 18, 21 to second heat exchanger 13 in order to preheat the tap water in second heat exchanger 13. The tap water then follows the above described route via third heat exchanger 10 and is delivered into the upper part of reservoir 16. When no tap water is being drawn off, the tap water in the reservoir can in this way circulate until reservoir 16 is fully filled with tap water having a substantially homogenous final temperature lying between 56 and 60°C. Proliferation of any possible legionella bacteria can be prevented at this temperature. In order to further prevent legionella the whole of the tap water in reservoir 16 can be heated with a predetermined regularity, for instance once every seven days. At the bottom of reservoir 16 there can for instance be arranged for this purpose temperature sensors, for instance thermocouples, which measure whether the tap water present at the bottom of reservoir 16 has reached the desired temperature of about 56-60°C. If this is the case once every seven days, this means that the whole reservoir has been heated in these seven days, this being sufficient with a view to preventing multiplication of the possibly present legionella bacteria. If this has not happened for seven days, the whole of the tap water in reservoir 16 can be heated by heating the tap water in second heat exchanger 13 and third heat exchanger 10.

For the purpose of drawing off hot tap water the reservoir is connected to a drain conduit 19. Drain conduit 19 debouches at the top of reservoir 16 so that the hot tap water present in the top of reservoir 16 as described above is drawn off. Cold fresh tap water is supplied via feed 20 in order to replenish reservoir 16. This cold tap water can be heated via conduit 21 and second and third heat exchangers 13, 10 and delivered to the top of reservoir 16, and can also be delivered to the bottom of the reservoir via conduit 18, wherein the water delivered to reservoir 16 via conduit 18 is not heated.

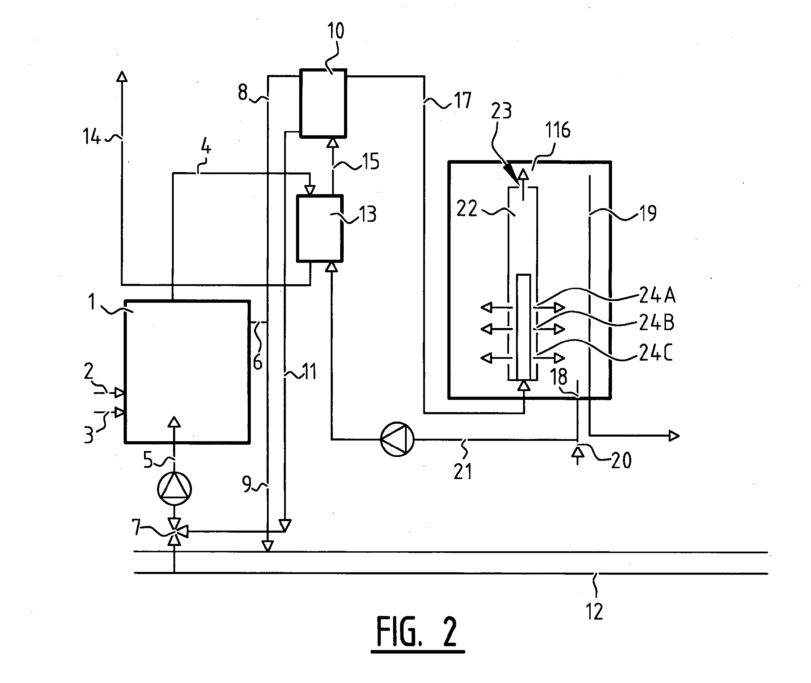

Figure 2 shows a second embodiment of the system according to the invention. This system comprises a reservoir 116 which differs from reservoir 16 of figure 1. The system is further the same, and reference is made to the above description for the operation of the system of figure 2.

Reservoir 116 comprises a tube 22 disposed vertically therein, via which tube 22 the conduit 17 is connected to reservoir 116. Tube 22 extends round conduit 17 and debouches in the upper part of reservoir 116 via a first opening 23. Conduit 17 debouches at a predetermined height in tube 22. The predetermined height lies for instance at between 30-70% of the height of reservoir 116. Tube 22 also has a number of second openings 24A-24C which debouch in reservoir 116. Each opening 24A-24C debouches in reservoir 116 at a predetermined height which is lower than the height at which conduit 17 debouches in tube 22. Via the second openings 24A-24C tap water with a temperature lower than the maximum temperature can be delivered to reservoir 116 without the stratification of the tap water in reservoir 116 being disrupted. This is advantageous when third heat exchanger 10 is not operating or not operating at full power, for instance when the water heated in the central heating boiler is being used to heat the spaces in the building or when the central heating boiler heats the water to a temperature below a maximum temperature. Tap water can in this case be heated in second heat exchanger 13 so that the residual heat in the flue gases is utilized, and no or limited heat transfer to the tap water takes place in third heat exchanger 10 so that the tap water in conduit 17 has a temperature lying below the temperature of the water present at the top of reservoir 116. When the tap water flows through heat exchangers 13, 10 at a determined flow rate, for instance 1.5 l/min, which is lower than a maximum flow rate, for instance 10 l/min, the water will flow at a limited speed out of conduit 17 into tube 22. Owing to the limited speed the tap water will not flow via first opening 23 into reservoir 116 and therefore not disrupt the stratification, but will on the contrary flow downward along the outer periphery of conduit 17 into tube 22. The tap water can then flow via a second opening 24A-24C into reservoir 116, wherein the tap water flows through this second opening 24A-24C where the density of the tap water is equal to or greater than the density of the tap water present at this height in reservoir 116. Or the tap water flows through this second opening 24A-24C where the temperature of the tap water is equal to or lower than the temperature of the tap water present at this height in reservoir 116.

When reservoir 116 is heated and heat exchanger 10 operates at a greater power, the water flows at a higher flow rate which is equal to, or at least almost equal to, the maximum flow rate through heat exchangers 13, 10 so that the tap water flows at a higher speed out of conduit 17 into tube 22 and flows via first opening 23 into reservoir 116. When the tap water has the maximum temperature, it is in this way delivered into the upper part of reservoir 116 as described above.

Reservoir 116 is therefore a self-regulating reservoir, wherein the tap water is delivered automatically at that height in reservoir 116 where the water stored at this height has substantially the same temperature. The stratification of the stored tap water is in this way maintained.

Tube 22 is preferably manufactured from a thermally non-conductive material so that there is no heat transfer between the tap water present in the tube and the tap water present in reservoir. The tube is manufactured for instance from polypropylene (PP).

Figure 3 shows a third embodiment of the system according to the invention. This system is the same as the system of figure 2, wherein reference is made to the above description for the description of the operation thereof, and further comprises a second three-way valve 25 disposed in conduit 21. As described above, cold tap water is guided via conduit 21 to the second and third heat exchangers 13, 10. This cold tap water comes from both conduit 18 and feed 20. Hot water drawn off via drain conduit 19 can also be guided back to conduit 21 by the three-way valve 25 according to the invention and be guided once again through second heat exchanger 13 and third heat exchanger 10. An advantage hereof is that it is possible to heat the spaces in a house with relatively low power by reversing the operation of third heat exchanger 10. Here the hot tap water relinquishes its heat to the central heating water in third heat exchanger 10 so that the central heating water can heat the spaces in the building. Three-way valve 7 is for this purpose a controllable three-way valve and is set here such that the water from conduit 6 flows via conduit 8 to third heat exchanger 10 as well as via conduit 9 to the radiators. The controllable three-way valve 7 is for this purpose in an intermediate position so that the central heating water flows to both the third heat exchanger 10 and the radiators. The more central heating water which flows to the third heat exchanger 10, the greater the heat transfer will be from the hot tap water to the cold(er) central heating water and the higher the temperature of the central heating water will be when it leaves third heat exchanger 10. The central heating water heated in third heat exchanger 10 then flows once again through central heating boiler 1 via feed 5 and is then redistributed over conduits 8 and 9 such that the central heating water heated previously in third heat exchanger 10 can flow via conduit 9 to the radiators in order to heat the building. This demonstrates that the distribution of the central heating water over the third heat exchanger 10 and the radiators, and thereby the temperature of the central heating water with which the building can be heated, can be controlled using the controllable three-way valve 7. The power with which the building can be heated can be set by adjusting the flow rate at which the central heating water flows, wherein a higher flow rate results in a greater power because more heat transfer from the tap water to the central heating water takes place in third heat exchanger 10. A controllable pump (not shown) can be provided for setting the flow rate. Three-way valve 7 is for instance set such that half the central heating water flows via conduit 8 to third heat exchanger 10 and half via conduit 9 to the radiators. The tap water cooled in third heat exchanger 10 can flow back via the second openings 24A-24C into reservoir 116. As described above, reversing the operation of third heat exchanger 10 provides the advantage that the building can be heated at a relatively low power. Three-way valve 25 can therefore also be set such that, only when the heat demand is lower than the minimum which the central heating boiler 1 can supply through heating of the central heating water in the first heat exchanger of central heating boiler 1 using the flue gases obtained from the burner, the hot tap water is guided back to third heat exchanger 10. Three-way valve 25 can also be set such that, only when reservoir 116 has been filled with a predetermined percentage or more of hot tap water, the hot tap water is guided back to third heat exchanger 10. This percentage can for instance lie between 70-100%. In order to measure the percentage a number of temperature sensors, for instance thermocouples, can be provided which are disposed at predetermined heights in reservoir 116 for the purpose of measuring the temperature of the tap water (not shown) at this height. Three-way valve 25 can be adjustable here on the basis of the measured temperatures. The flow rate at which the hot tap water flows through third heat exchanger 10 lies below the maximum flow rate such that the tap water flows at the above described limited speed into tube 22.

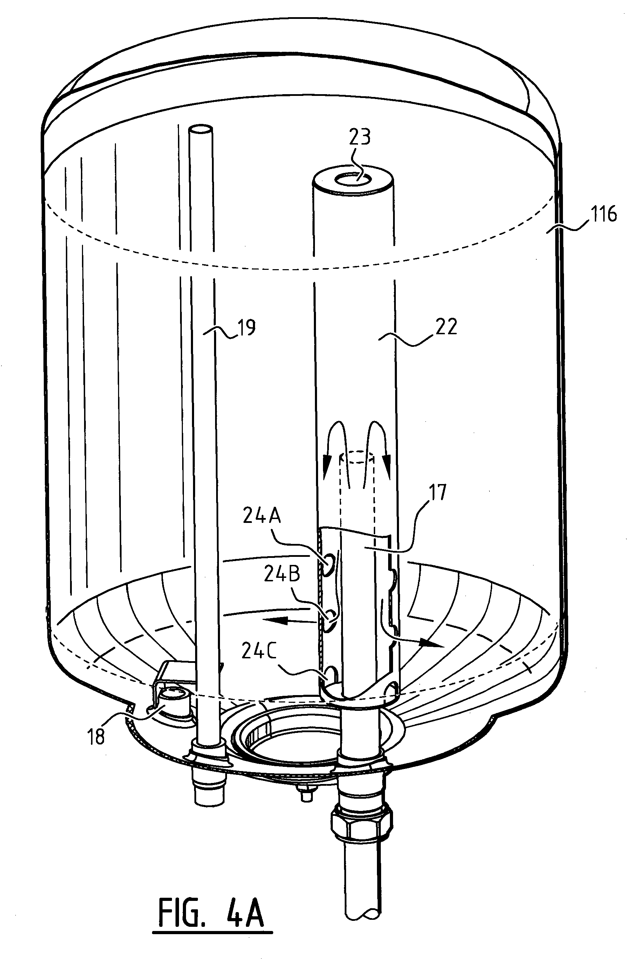

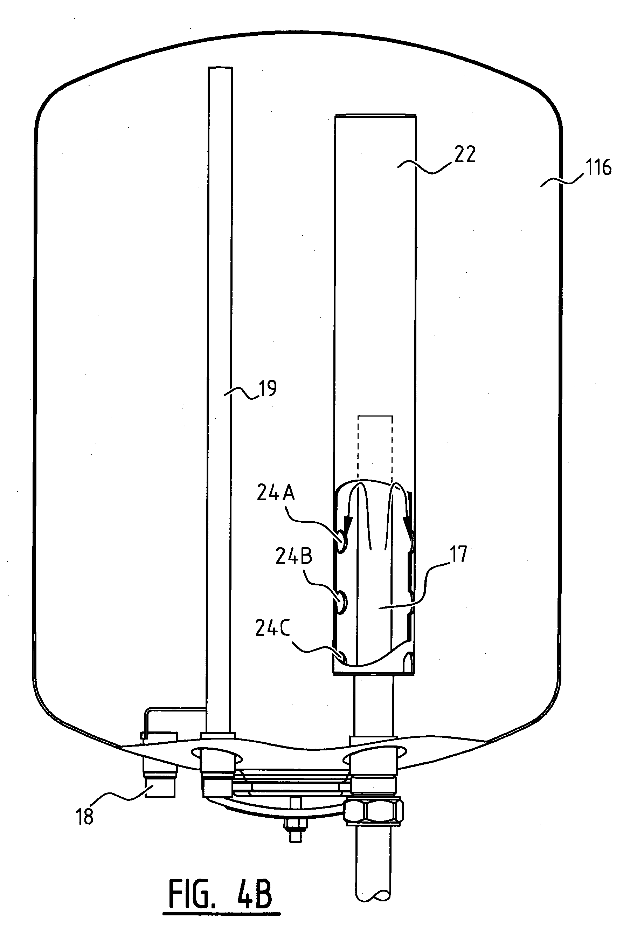

Figures 4A, 4B show reservoir 116 in which are clearly shown tube 22 with second openings 24A-24C and conduit 17 which debouches in the tube. Figure 4B shows that the conduit debouches in tube 22 at a height of about 60% of the height of reservoir 116. Openings 24A-24C debouch respectively at a height of about 17, 25 and 33% of the height of reservoir 116.

It is noted that the invention is not limited to the above discussed exemplary embodiments but also extends to other variants within the scope of the appended claims.

Two opposite second openings are thus shown in each case at three different heights in the tube. It will be apparent that the number of second openings and the number of heights can be selected as desired.

## Claims

1. System for heating two mutually separated liquids, wherein a first liquid is intended for heating a building and wherein the second liquid is tap water, which system comprises:
- a device (1) for heating the first liquid, the device (1) comprising:
- a housing with an air feed (2), a fuel feed (3) and a flue gas discharge (4);
- a burner disposed in the housing for combusting fuel and air supplied to the burner while releasing flue gases, which burner is connected on the one hand for medium throughflow to the fuel feed (3) and the air feed (2) and is connected on the other for medium throughflow to the flue gas discharge (4);
- a first heat exchanger connected for medium throughflow to the flue gas discharge (4) for the purpose of transferring heat from the flue gases to the first liquid in order to heat the first liquid;
- a second heat exchanger (13) disposed downstream of the first heat exchanger for transferring residual heat from the flue gases to the tap water in order to preheat the tap water;
- a third heat exchanger (10) disposed downstream of the first heat exchanger and the second heat exchanger (13) for transferring heat from the first liquid to the preheated tap water in order to further heat the preheated tap water,
**characterized by**
a reservoir (16, 116) for storing tap water, which reservoir (16, 116) is disposed downstream of the third heat exchanger (10) and connected for medium throughflow thereto by means of a first conduit (17), wherein the conduit (17) debouches in an upper part of the reservoir (16, 116) such that the tap water heated in the third heat exchanger (10) is delivered during use into the upper part of the reservoir (16, 116), and wherein the reservoir (16, 116) is on the other hand connected for medium throughflow by means of a second conduit (18) to the second heat exchanger (13) and disposed upstream thereof, which second conduit (18) is connected to a lower part of the reservoir (16, 116) for the purpose of supplying tap water from the lower part of the reservoir (16, 116) to the second heat exchanger (13).

2. System as claimed in claim 1, further comprising a draw-off conduit (19) which debouches in an upper part of the reservoir (16, 116) for the purpose of drawing off the heated tap water stored in the reservoir (16, 116).

3. System as claimed in claim 1 or 2, wherein the reservoir (116) comprises a tube (22) which is disposed vertically therein and via which the conduit (17) is connected to the reservoir (116), wherein the tube (22) encloses the conduit (17) and debouches in the upper part of the reservoir (116) via a first opening (23), wherein the conduit (17) debouches at a predetermined height in the tube (22), and wherein the tube (22) has a number of second openings (24A-24C) debouching in the reservoir (116), each at a predetermined height which is lower than the height at which the conduit (17) debouches in the tube (22), for the purpose of delivering tap water at a temperature lower than a maximum temperature of the tap water to the reservoir (116) such that the tap water is delivered via this second opening (24A-24C) to the reservoir (116) where the temperature of the tap water is equal to or lower than the temperature of the tap water stored at this height.

4. System as claimed in claim 3, wherein the predetermined height lies at between 40-75% of the height of the reservoir, preferably between 50-65% of the height of the reservoir, more preferably at about 60% of the height of the reservoir.

5. System as claimed in claim 3 or 4, wherein the tube (22) comprises three second openings (24A-24C) which preferably debouch in the reservoir (116) at respectively between 15-20%, 22-28% and 30-35% of the height of the reservoir (116).

6. System as claimed in any of the foregoing claims 3-5, wherein the tube (22) is manufactured from a thermally non-conductive material.

7. System as claimed in any of the foregoing claims 2-6, further comprising a three-way valve (25), which three-way valve (25) is connected for medium throughflow to the second heat exchanger (13) on the one hand and to the second conduit (18) and the draw-off conduit (19) on the other, wherein the three-way valve (25) is adjusted such that at a random moment either the second conduit (18) or the draw-off conduit (19) is connected for medium throughflow to the second heat exchanger (13) for the purpose of feeding to the second heat exchanger (13) tap water coming from either the second conduit (18) or the draw-off conduit (19) such that tap water present either at the bottom of the reservoir (116) or at the top of the reservoir (116) is supplied to the second heat exchanger (13).

8. System as claimed in claim 7, wherein the three-way valve (25) is set such that the draw-off conduit (19) is connected for medium throughflow to the second heat exchanger (13) only when power for heating the building is demanded which lies below a minimum power which can be supplied by the device (1) for heating the first liquid.

9. System as claimed in claim 7 or 8, wherein the three-way valve (25) is set such that, when the reservoir (116) is filled with a predetermined percentage or more of heated tap water, the draw-off conduit (19) is connected for medium throughflow to the second heat exchanger (13).

10. System as claimed in claim 9, wherein the predetermined percentage lies between 70-100%.

11. System as claimed in claim 9 or 10, comprising a number of temperature sensors disposed at predetermined heights in the reservoir (116) for measuring the temperature of the tap water at this height, and wherein the three-way valve (25) is adjustable on the basis of the measured temperatures.

## Patentansprüche

1. System zum Heizen zweier voneinander getrennter Flüssigkeiten, wobei eine erste Flüssigkeit zum Heizen eines Gebäudes vorgesehen ist und wobei die zweite Flüssigkeit Leitungswasser ist, wobei das System aufweist:
- eine Vorrichtung (1) zum Heizen der ersten Flüssigkeit, wobei die Vorrichtung (1) aufweist:
- ein Gehäuse mit einer Luftzuführung (2), einer Brennstoffzuführung (3) und einer Rauchgasableitung (4),
- einen Brenner, der in dem Gehäuse angeordnet ist, zum Verbrennen von dem Brenner zugeführtem Brennstoff und Luft wobei Rauchgase freigesetzt werden, wobei der Brenner einerseits für einen Mitteldurchfluss mit der Brennstoffzuführung (3) und der Luftzuführung (2) verbunden ist und andererseits für einen Mitteldurchfluss mit der Rauchgasableitung (4) verbunden ist,
- einen ersten Wärmetauscher, der für einen Mitteldurchfluss mit der Rauchgasableitung (4) verbunden ist, zum Zweck des Übertragens von Wärme von den Rauchgasen auf die erste Flüssigkeit, um die erste Flüssigkeit zu heizen,
- einen zweiten Wärmetauscher (13), der stromabwärts von dem ersten Wärmetauscher angeordnet ist, zum Übertragen von Restwärme von den Rauchgasen auf das Leitungswasser, um das Leitungswasser vorzuheizen,
- einen dritten Wärmetauscher (10), der stromabwärts von dem ersten Wärmetauscher und dem zweiten Wärmetauscher (13) angeordnet ist, zum Übertragen von Wärme von der ersten Flüssigkeit auf das vorgeheizte Leitungswasser, um das vorgeheizte Leitungswasser weiter zu heizen,
**gekennzeichnet durch**
ein Reservoir (16, 116) zum Speichern von Leitungswasser, wobei das Reservoir (16, 116) stromabwärts von dem dritten Wärmetauscher (10) angeordnet ist und fiir einen Mitteldurchfluss mittels eines ersten Leitungsrohres (17) damit verbunden ist, wobei das Leitungsrohr (17) in einen oberen Teil des Reservoirs (16, 116) mündet, so dass das in dem dritten Wärmetauscher (10) geheizte Leitungswasser während des Gebrauchs in den oberen Teil des Reservoirs (16, 116) zugeführt wird, und wobei das Reservoir (16, 116) auf der anderen Seite für einen Mitteldurchfluss mittels eines zweiten Leitungsrohres (18) mit dem zweiten Wärmetauscher (13) verbunden und stromaufwärts davon angeordnet ist, wobei das zweite Leitungsrohr (18) mit einem unteren Teil des Reservoirs (16, 116) verbunden ist, zum Zweck des Bereitstellens von Leitungswasser aus dem unteren Teil des Reservoirs (16, 116) an den zweiten Wärmetauscher (13).

2. System gemäß Anspruch 1, ferner aufweisend ein Ablaufleitungsrohr (19), das in einen oberen Teil des Reservoirs (16, 116) mündet, zum Zweck des Ablassen des in dem Reservoir (16, 116) gespeicherten geheizten Leitungswassers.

3. System gemäß Anspruch 1 oder 2, wobei das Reservoir (116) ein Rohr (22) aufweist, das vertikal darin angeordnet ist, und über das das Leitungsrohr (17) mit dem Reservoir (116) verbunden ist, wobei das Rohr (22) das Leitungsrohr (17) umschließt und über eine erste Öffnung (23) in den oberen Teil des Reservoirs (116) mündet, wobei das Leitungsrohr (17) in einer vorbestimmten Höhe in das Rohr (22) mündet, und wobei das Rohr (22) eine Anzahl von zweiten Öffnungen (24A bis 24C) aufweist, die jede in einer vorbestimmten Höhe, die geringer als die Höhe ist, auf der das Leitungsrohr (17) in das Rohr (22) mündet, in das Reservoir (116) münden, zum Zweck des Bereitstellens von Leitungswasser mit einer Temperatur, die geringer als eine Maximaltemperatur des Leitungswassers ist, an das Reservoir (116), so dass das Leitungswasser über diese zweite Öffnung (24A bis 24C) an das Reservoir (116) bereitgestellt wird, wo die Temperatur des Leitungswassers kleiner oder gleich der Temperatur des auf dieser Höhe gespeicherten Leitungswassers ist.

4. System gemäß Anspruch 3, wobei die vorbestimmte Höhe auf zwischen 40% bis 75% der Höhe des Reservoirs, vorzugsweise zwischen 50% bis 65% der Höhe des Reservoirs, noch bevorzugter auf ungefähr 60% der Höhe des Reservoirs liegt.

5. System gemäß Anspruch 3 oder 4, wobei das Rohr (22) drei zweite Öffnungen (24A bis 24C) aufweist, die vorzugsweise auf jeweils zwischen 15% bis 20%, 22% bis 28% und 30% bis 35% der Höhe des Reservoirs (116) in das Reservoir (116) münden.

6. System gemäß irgendeinem der vorhergehenden Ansprüche 3 bis 5, wobei das Rohr (22) aus einem thermisch nicht-leitfähigen Material hergestellt ist.

7. System gemäß irgendeinem der vorhergehenden Ansprüche 2 bis 6, ferner aufweisend ein Dreiwegeventil (25), wobei das Dreiwegeventil (25) für einen Mitteldurchfluss auf der einen Seite mit dem zweiten Wärmetauscher (13) und auf der anderen Seite mit dem zweiten Leitungsrohr (18) und dem Auflaufleitungsrohr (19) verbunden ist, wobei das Dreiwegeventil (25) derart eingestellt ist, dass in einem Zufallsmoment entweder das zweite Leitungsrohr (18) oder das Ablaufleitungsrohr (19) für einen Mitteldurchfluss mit dem zweiten Wärmetauscher (13) verbunden ist, zum Zweck des Zuführens von Leitungswasser, das entweder aus dem zweiten Leitungsrohr (18) oder dem Ablaufleitungsrohr (19) stammt, an den zweiten Wärmetauscher (13), so dass Leitungswasser, das sich entweder am Boden des Reservoirs (116) oder am oberen Ende des Reservoirs (116) befindet, dem zweiten Wärmetauscher (13) zugeführt wird.

8. System gemäß Anspruch 7, wobei das Dreiwegeventil (25) derart eingestellt ist, dass das Ablaufleitungsrohr (19) für einen Mitteldurchfluss nur dann mit dem zweiten Wärmetauscher (13) verbunden ist, wenn Leistung zum Heizen des Gebäudes beansprucht wird, die unter einer Minimalleistung liegt, die durch die Vorrichtung (1) zum Heizen der ersten Flüssigkeit bereitgestellt werden kann.

9. System gemäß Anspruch 7 oder 8, wobei das Dreiwegeventil (25) derart eingestellt ist, dass, wenn das Reservoir (116) mit einem vorbestimmten Prozentsatz oder mehr von geheiztem Leitungswasser gefüllt ist, das Ablaufleitungsrohr (19) für einen Mitteldurchfluss mit dem zweiten Wärmetauscher (13) verbunden ist.

10. System gemäß Anspruch 9, wobei der vorbestimmte Prozentsatz zwischen 70% bis 100% liegt.

11. System gemäß Anspruch 9 oder 10, aufweisend eine Anzahl von Temperaturfühlern, die auf vorbestimmten Höhen in dem Reservoir (116) angeordnet sind, zum Messen der Temperatur des Leitungswassers auf dieser Höhe, und wobei das Dreiwegeventil (25) auf der Grundlage der gemessenen Temperaturen verstellbar ist.

## Revendications

1. Système pour chauffer deux liquides mutuellement séparés, dans lequel un premier liquide est prévu pour chauffer un bâtiment et dans lequel le second liquide est de l'eau du robinet, lequel système comprend :
un dispositif (1) pour chauffer le premier liquide, le dispositif (1) comprenant :
un boîtier avec une alimentation en air (2), une alimentation en combustible (3) et une évacuation de gaz de fumées (4) ;
un brûleur disposé dans le boîtier pour faire brûler le combustible et l'air amenés au brûleur tout en libérant les gaz de fumées, lequel brûleur est raccordé d'une part pour l'écoulement de milieu, à l'alimentation en combustible (3) et à l'alimentation en air (2) et est raccordé d'autre part pour l'écoulement de milieu, à l'évacuation de gaz de fumées (4) ;
un premier échangeur de chaleur raccordé pour l'écoulement de milieu vers l'évacuation de gaz de fumées (4) afin de transférer la chaleur des gaz de fumées au premier liquide pour chauffer le premier liquide ;
un deuxième échangeur de chaleur (13) disposé en aval du premier échangeur de chaleur pour transférer la chaleur résiduelle des gaz de fumées à l'eau du robinet afin de préchauffer l'eau du robinet;
un troisième échangeur de chaleur (10) disposé en aval du premier échangeur de chaleur et du deuxième échangeur de chaleur (13) pour transférer la chaleur du premier liquide à l'eau du robinet préchauffée afin de continuer à chauffer l'eau du robinet préchauffée,
**caractérisé par** :
un réservoir (16, 116) pour stocker l'eau du robinet, lequel réservoir (16, 116) est disposé en aval du troisième échangeur de chaleur (10) et raccordé pour l'écoulement de milieu à ce dernier au moyen d'un premier conduit (17), dans lequel le conduit (17) débouche dans une partie supérieure du réservoir (16, 116) de sorte que l'eau du robinet chauffée dans le troisième échangeur de chaleur (10) est distribuée, pendant l'utilisation, dans la partie supérieure du réservoir (16, 116) et dans lequel le réservoir (16, 116) est, d'autre part, raccordé pour l'écoulement de milieu, au moyen d'un second conduit (18) au deuxième échangeur de chaleur (13) et disposé en amont de ce dernier, lequel second conduit (18) est raccordé à une partie inférieure du réservoir (16, 116) afin de fournir l'eau du robinet de la partie inférieure du réservoir (16, 116) au deuxième échangeur de chaleur (13).

2. Système selon la revendication 1, comprenant en outre un conduit de vidange (19) qui débouche dans une partie supérieure du réservoir (16, 116) afin de vidanger l'eau du robinet chauffée stockée dans le réservoir (16, 116).

3. Système selon la revendication 1 ou 2, dans lequel le réservoir (116) comprend un tube (22) qui est disposé verticalement à l'intérieur de ce dernier et via lequel, le conduit (17) est raccordé au réservoir (116), dans lequel le tube (22) enferme le conduit (17) et débouche dans la partie supérieure du réservoir (116) via une première ouverture (23), dans lequel le conduit (17) débouche à une hauteur prédéterminée dans le tube (22) et dans lequel le tube (22) a un certain nombre de secondes ouvertures (24A-24C) débouchant dans le réservoir (116), chacune à une hauteur prédéterminée qui est inférieure à la hauteur à laquelle le conduit (17) débouche dans le tube (22) afin de distribuer l'eau du robinet à une température inférieure à une température maximum de l'eau du robinet, dans le réservoir (116) de sorte que l'eau du robinet est distribuée via cette seconde ouverture (24A - 24C) au réservoir (116) où la température de l'eau du robinet est égale ou inférieure à la température de l'eau du robinet stockée à cette hauteur.

4. Système selon la revendication 3, dans lequel la hauteur prédéterminée est comprise entre 40 et 75% de la hauteur du réservoir, de préférence entre 50 et 65% de la hauteur du réservoir, encore de préférence à environ 60% de la hauteur du réservoir.

5. Système selon la revendication 3 ou 4, dans lequel le tube (22) comprend trois secondes ouvertures (24A-24C) qui débouchent de préférence dans le réservoir (116) respectivement entre 15-20% ; 22-28% et 30-35% de la hauteur du réservoir (116).

6. Système selon l'une quelconque des revendications 3 à 5, dans lequel le tube (22) est fabriqué à partir d'un matériau thermiquement non conducteur.

7. Système selon l'une quelconque des revendications 2 à 6, comprenant en outre une valve à trois voies (25), laquelle valve à trois voies (25) est raccordée pour l'écoulement de milieu au deuxième échangeur de chaleur (13) d'une part et au second conduit (18) et au conduit de vidange (19) d'autre part, dans lequel la valve à trois voies (25) est ajustée de sorte qu'à un moment aléatoire, le second conduit (18) ou le conduit de vidange (19) est raccordé pour l'écoulement de milieu au deuxième échangeur de chaleur (13) afin d'alimenter le deuxième échangeur de chaleur (13) en eau du robinet provenant du second conduit (18) ou du conduit de vidange (19) de sorte que l'eau du robinet présente au fond du réservoir (116) ou au sommet du réservoir (116) est amenée dans le deuxième échangeur de chaleur (13).

8. Système selon la revendication 7, dans lequel la valve à trois voies (25) est réglée de sorte que le conduit de vidange (19) est raccordé pour l'écoulement de milieu au deuxième échangeur de chaleur (13) uniquement lorsque la puissance nécessaire pour chauffer le bâtiment, est inférieure à une puissance minimum qui peut être fournie par le dispositif (1) pour chauffer le premier liquide.

9. Système selon la revendication 7 ou 8, dans lequel la valve à trois voies (25) est réglée de sorte que, lorsque le réservoir (116) est rempli avec un pourcentage prédéterminé ou supérieur à l'eau du robinet chauffée, le conduit de vidange (19) est raccordé pour l'écoulement de milieu vers le deuxième échangeur de chaleur (13).

10. Système selon la revendication 9, dans lequel le pourcentage prédéterminé est compris entre 70 et 100%.

11. Système selon la revendication 9 ou 10, comprenant un certain nombre de capteurs de température disposés à des hauteurs prédéterminées dans le réservoir (116) pour mesurer la température de l'eau du robinet à cette hauteur, et dans lequel la valve à trois voies (25) est ajustable en fonction des températures mesurées.
